Europäisches Patentamt

European Patent Office

Office européen des brevets

(11) Publication number: **0 080 893**
**B1**

# EUROPEAN PATENT SPECIFICATION

(45) Date of publication of patent specification: **27.05.87**

(51) Int. Cl.⁴: **B 60 R 25/00, B 60 R 25/02**

(21) Application number: **82306360.7**

(22) Date of filing: **30.11.82**

(54) Security device.

(30) Priority: **01.12.81 GB 8136220**
**30.04.82 GB 8212767**

(43) Date of publication of application:
**08.06.83 Bulletin 83/23**

(45) Publication of the grant of the patent:
**27.05.87 Bulletin 87/22**

(84) Designated Contracting States:
**AT BE CH DE FR GB IT LI LU NL SE**

(56) References cited:
**DE-U-7 735 706**
**GB-A-1 269 813**
**US-A-1 502 933**

(73) Proprietor: **Artpack Limited**
**14 Market Place**
**Devizes Wiltshire SN10 1HT (GB)**

(72) Inventor: **Clark, Peter John**
**28 Valentine Crescent**
**Caversham Reading Berks (GB)**
Inventor: **Johnstone, Barry Michael**
**The Long House Evercreech**
**Nr. Shepton Mallett Somerset (GB)**

(74) Representative: **Votier, Sidney David et al**
**CARPMAELS & RANSFORD 43, Bloomsbury**
**Square**
**London WC1A 2RA (GB)**

Courier Press, Leamington Spa, England.

## Description

This invention relates to a security device for use in preventing the unauthorised rotation of a wheel such as a steering wheel, an undriven wheel of a vehicle, a control wheel for industrial apparatus, or any other wheel where it is desired to prevent unauthorised movement of the wheel.

The device may be applied for instance to wheels of box trailers, trailer tents, caravans, horse boxes, boat trailers, towable industrial appliances such as air compressors winches etc., goods trailers or any vehicle which possesses an accessible undriven wheel. It is equally suitable for use on wheels fitted with pneumatic or solid tyres.

Alternatively it may for example be applied to a steering wheel of a motor vehicle, to a tiller wheel of a boat, to a control wheel for opening a sluice gate or any similar wheel.

An object of the invention is to provide an easily portable security device which may be applied with very little effort to a vehicle wheel or a steering wheel or any other wheel. The device is so arranged that while it may allow a limited movement of the wheel it prevents the wheel being turned through more than a fraction of a full turn and thus would prevent a vehicle being driven away, or a machine or appliance being turned on, or a boat being steered, for example.

The security device will virtually immobilise the vehicle to which it is attached or, if attached to a steering wheel will virtually prevent the vehicle being steered.

DE—U—7 735 706 shows a security device for attachment to a wheel comprising a boss member and three spaced callipers, two of the callipers being pivoted to the boss and the third calliper being adjustably lockable on the boss, the callipers being arranged so that when applied to a wheel they embrace both sides of the wheel and are spaced around the periphery of the wheel, one of the callipers being formed as a slidable calliper so as to allow for the adjustable locking aspect of the device and being arranged to slide across the face of the boss member in guide means formed on or in the boss member.

In this known device there are two heavy ground-engaging plates carried by two of the callipers, one in each side of the wheel, and the third calliper extends vertically over the top of the wheel.

GB—A—1269813 also shows an anti-theft device which uses an extension of a calliper as a means for preventing wheel rotation.

Thus the present invention relates to a security device for attachment to a wheel comprising a boss member and at least three spaced callipers two of the three callipers being pivoted to the boss and the third calliper being adjustably lockable on the boss the callipers being arranged so that when applied to a wheel they embrace both sides of the wheel and are spaced around the periphery of the wheel. The invention is characterised by this, that the callipers may be arranged at any circumferential location around the wheel and that the third calliper which is not pivoted to the boss carries an extension capable of preventing rotation of the wheel by coming into contact with fixed structure (such as the ground) but not normally in contact with the fixed structure.

The third calliper is preferably formed as a loose or slidable calliper so as to allow for the adjustable locking aspect of the device. The adjustable calliper is preferably arranged to slide across the face of the boss member in guide means formed on or in the boss member, or formed by the other two callipers.

Stops may be provided to limit movement of two of the callipers which are pivoted to the plate.

The lever may be pivoted to the boss member and arranged to engage notches in the adjustable calliper so as to enable the user to draw the callipers tightly onto the wheel.

In the accompanying drawings:—

Figure 1 is a side elevation of a security device according to the invention attached to a vehicle wheel:

Figure 1a is an elevation of the same device;

Figure 2 is an isometric view of a vehicle wheel with the device of Figures 1 and 2 in place so as to prevent rotation of the wheel;

Figure 3 is an enlarged elevation of a portion of the device shown in Figure 1;

Figure 4 is an exploded view of parts of the device shown in Figures 1 and 2;

Figure 5 is an elevation of a boss plate forming part of a second device embodying the invention;

Figure 5a is an end elevation of the boss plate shown in Figure 5;

Figure 6 is a plan view of one of a pair of swivelling callipers used in conjunction with the boss plate shown in Figure 5;

Figure 6a is a front elevation of the same calliper;

Figure 7 is a plan of a loose calliper of adjustable calliper used with the boss plate of Figure 5;

Figure 7a is a side elevation of the same loose calliper;

Figure 8 is an exploded view showing parts of the device ready for assembly;

Figures 9, 10 and 11 show respective stages in the mounting of the device on a vehicle wheel and the locking of the device in place;

Figure 12 shows another embodiment of the invention in which a security or locking device has a manually operable lever to draw the device tightly onto the wheel or tyre; and

Figure 13 shows another embodiment of the invention in which the security device is applied to the steering wheel of a motor vehicle.

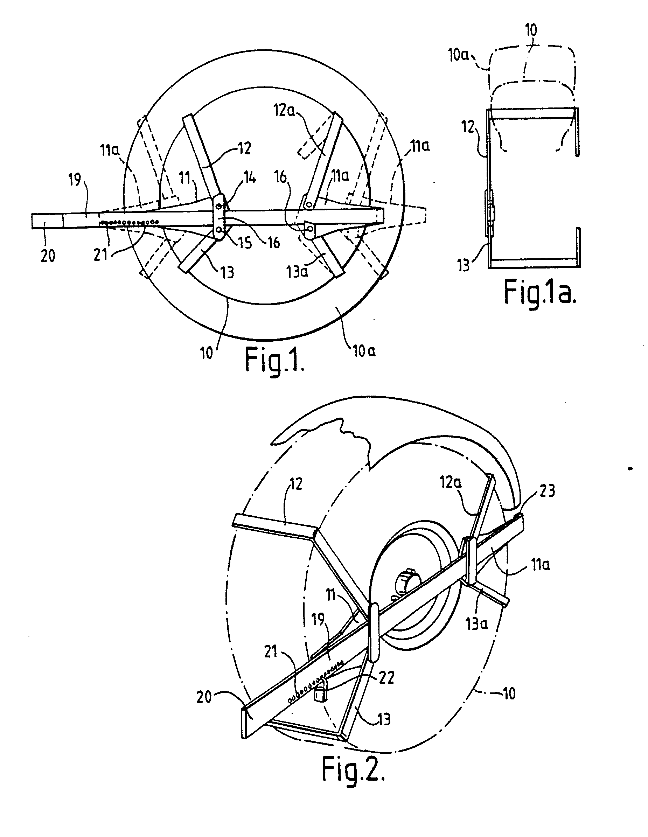

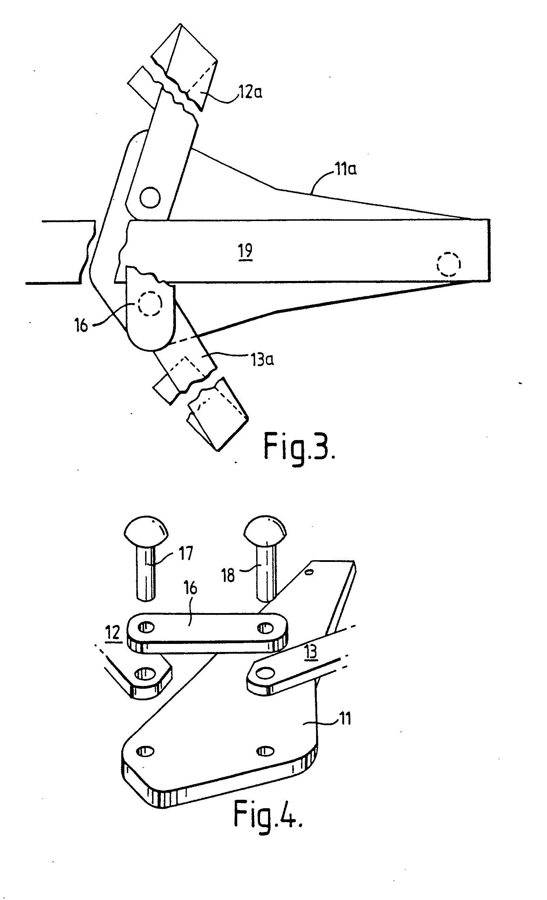

In the embodiment of the invention shown in Figures 1 to 4 the security device, which is shown applied to a wheel 10, comprises a first boss plate 11 and a second boss plate 11a. Pivoted to the first boss plate 11 are a pair of callipers 12 and 13 and pivoted to the second boss plate 11a are a pair of callipers 12a and 13a. The callipers extend around the edge of the wheel and beyond the edge on the other side of the wheel as shown in dotted line in the right hand portion of Figure 1 and also shown in Figure 1a. The way in which the callipers 12 and 13 are pivoted to the boss plate 11 is illustrated in Figures 3 and 4. Rivets 17, 18 extend through holes in the link 16 and through holes in the ends of the callipers 12 and 13 and are secured in further holes in the boss plate 11.

This leaves a space between the link 16 and the boss plate 11 on each of the boss plates 11 and 11a. Through this space extends a loose or adjustable calliper 19 which has an extension 20 adapted to engage the ground when the device is applied to a wheel as shown in Figure 2. The adjustable calliper 19 has a row of holes 21 which enable the calliper to be locked into position by applying a padlock 22 through one of the holes 21 into a corresponding hole in the boss plate 11.

The remote end of the loose calliper 19 is curled round at 23 to engage the corresponding end of boss plate 11a as seen in Figure 2 particularly.

It will be seen that by applying the pivoted callipers 12, 13 and 12a, 13a to opposite sides of a wheel 10 and then pulling the loose calliper 19 tight and locking it in position the security device is firmly attached to the wheel and the extension 20 of loose calliper 19 prevents the wheel from turning more than a few degrees.

Figure 1 shows the way in which the device is capable of adjustment of accommodate various sizes of wheels. The wheel 10a is of larger diameter than the wheel 10 but as can be seen from the dotted positions of the boss plates 11, 11a and the corresponding positions of the callipers the device may be arranged to lock a larger diameter wheel, or a smaller diameter wheel as desired.

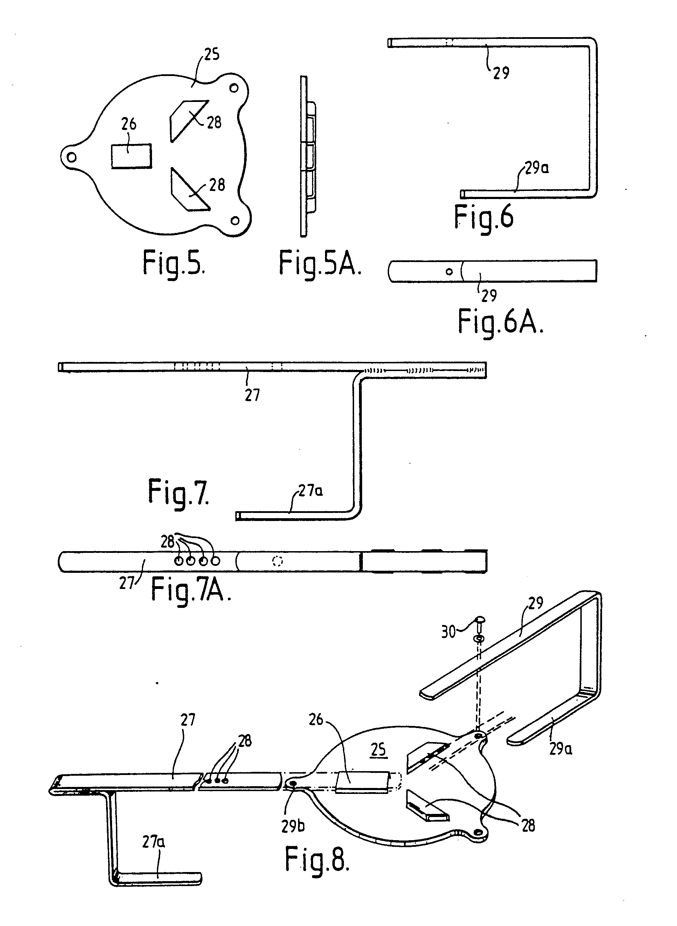

In the embodiment of the invention shown in Figures 5, to 11 there is only a single boss plate 25 (Figure 5 and 5a). The boss plate 25 is provided with a bracket 26 welded to the boss plate and adapted to receive the adjustable or loose calliper 27. The boss plate 25 also has two stops 28 which are in the form of short plates welded to the boss plate and act as stops which limit the pivoting movement of a pair of callipers 29, only one of which is shown in Figure 8. Callipers 29 are attached to boss plate 25 so as to be free to pivot by means of rivets 30.

The shape of the calliper 29 is shown more clearly in Figures 6 and 6a and the shape of the calliper 27 is shown more clearly in Figures 7 and 7a. It will be seen that the calliper 29 has an extension 29a adapted to wrap around a wheel so that the calliper can engage both sides of a wheel. Similarly calliper 27 has an extension 27a to wrap around the wheel.

Calliper 27 also has a row of holes 28 which are adapted to register with a hole 29b in the end of the boss plate 25. By sliding the adjustable calliper 27 in the bracket 26 and then putting a locking device such as a padlock through registering one of holes 28 and hole 29b, the calliper 27 may be locked in position.

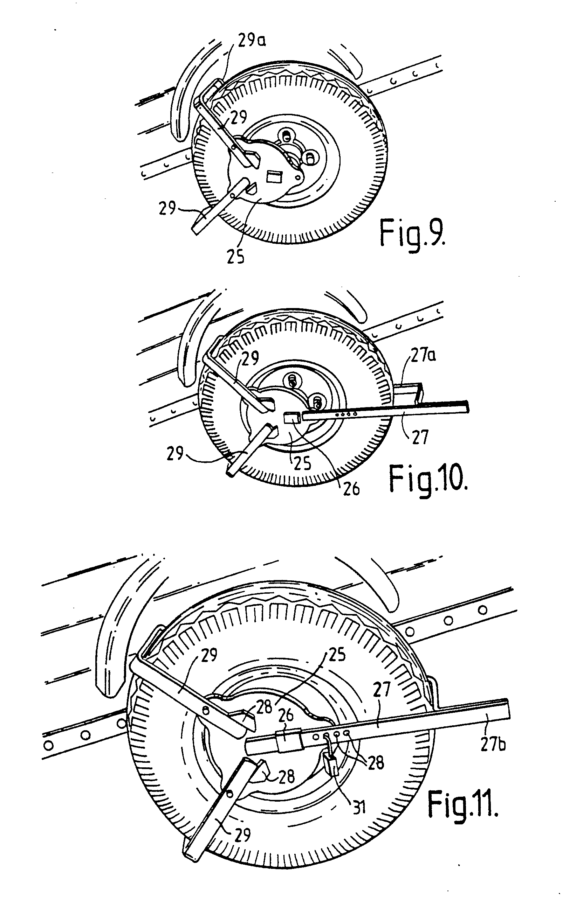

This can be illustrated more clearly by reference to Figures 9 to 11. In Figure 9 the device is shown applied to a trailer wheel, the boss plate 25 and two callipers 29 are first offered up to the wheel, with one of the callipers 29 being passed underneath the mud-guard so that the extensions 29a, or returns of the callipers, pass on the far side of the wheel.

As shown in Figure 10 the loose calliper 27 is then offered up to the boss plate 25 again with the extension 27a passing on the other side of the wheel.

The loose calliper 27 is then pushed through the bracket 26 at the same time holding the boss plate 25 firmly so that the callipers 29 engage the wheel. When the whole assembly is tight on the wheel a padlock 31 is placed through one of the holes 28 in the loose calliper 27 and in a hole formed in the end of the boss plate 25 (shown in Figure 8).

Thus the whole device is firmly held on the wheel and if somebody should attempt to move the trailer the end 27b of the device engages against the ground or against the fixed part of the trailer thus preventing movement of more than a few inches.

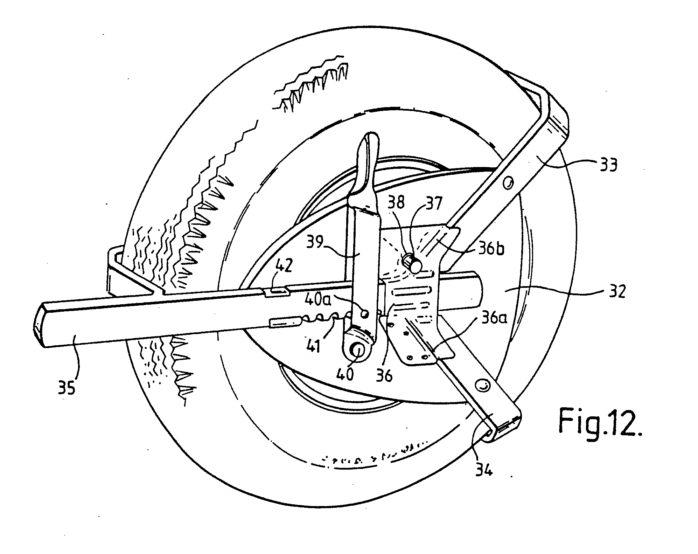

The embodiment shown in Figure 12 is different in that although it has a central boss plate 32 and a pair of pivoted calliper arms 33 and 34, the construction of the loose calliper arm 35 is changed. The loose calliper arm passes through a bracket 36 which performs a number of functions. Firstly it provides a guide for the loose calliper arm 35. Secondly it provides at 36a and 36b the stops for the pivoted callipers 33 and 34, and thirdly it provides by means of an aperture 37 provision for the locking device. The locking device in this instance can be a push button type lock 38 which enters the hole 37 in the bracket 36 and engages the loose calliper 35 so as to lock it in position.

To assist the operator in obtaining a really tight fit onto the wheel or tyre a pivoted lever 39 is provided, pivoted at 40 onto the boss plate 32. This lever has a pin 40a adapted to engage in any one of a number of half round slots or notches 41 in the lower side of the loose calliper 35.

By engaging the calliper 35 in successive brackets 42 and 36 and then engaging the pin 40a of pivoted lever 39 in an appropriate notch 41, the lever can be moved clockwise as seen in Figure 12, so as to draw the calliper 35 to the right and thus tighten up callipers 33, 34 and 35. When the calliper is in the appropriate position the press button lock 37 may be applied so as to lock the calliper 35 in place.

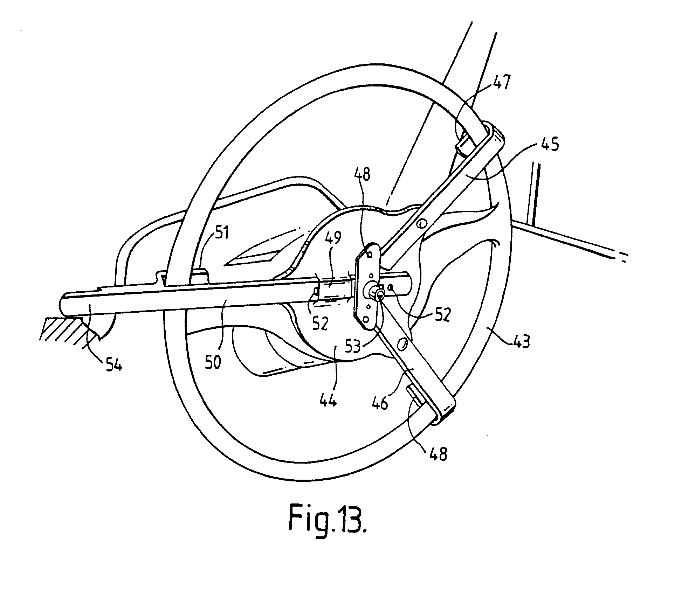

The device as described above may be applied to any type of wheel and to illustrate an alternative application Figure 13 shows a security device embodying the invention applied to a steering wheel 43 of a motor vehicle. The device includes a boss plate 44, pivoted calliper arms 45 and 46 each of which has a sharply bent return or extension 47, 48. As can be seen in Figure 13 the returns 47 and 48 engage round the rim of the steering wheel 43. The pivoting movement of the callipers 45 and 46 is limited by a plate 48 attached to the boss plate 44.

The boss plate 44 also has a bracket 49 through which a loose or adjustable calliper 50 extends. The adjustable calliper 50 has an extension 51 or return portion to engage the rim of the steering wheel and also has a row of holes 52.

When the device is applied to a steering wheel in a similar manner to that described in relation to a vehicle wheel above, the adjustable calliper 50 can be locked in place by means of a push button lock 53 which has an extension (not shown) which passes through a hole 52 in the adjustable calliper 50 and into a hole (not shown) in the boss plate 44.

The outward extension 54 of the adjustable calliper 50 is arranged to engage against a fixed portion of the motor vehicle such as the seat or door, thus preventing the steering wheel being turned.

The lock incorporated in this arrangement is similar to the lock incorporated in the Figure 12 arrangement and is a known integral barrel lock type. It locks the lever by engaging a stud, formed at the end of the barrel in a tongue formed on a locking lever. When the lever has reached the end of its travel the barrel is depressed causing the stud to enter a hole in the tongue. A pole retains the barrel in this position until the key is inserted and turned to disengage the pole allowing the barrel to pop out. Since this type of lock is well-known it is not illustrated in detail.

Reverting to the arrangement shown in Figure 11, for example, it will be seen that the boss plate 25 serves to prevent access to the wheel nuts and is suitably shaped to this end.

In each instance removal of the device is carried out by reversing the sequence described for putting it in position.

Towable vehicles, whilst uncoupled and unattended, are particularly vulnerable to illicit removal. When fitted and locked up as described above the security device of the invention immobilises the vehicle by preventing rotation of the wheel. Similarly if applied to a steering wheel or other wheel which operates machinery etc., the machinery cannot be operated or the vehicle cannot be steered with the device in position.

## Claims

1. A security device for attachment to a wheel comprising a boss member (11, 25, 32) and at least three spaced callipers (12, 13, 19; 27, 29, 29; 45, 46, 50) two of the callipers being pivoted to the boss and the third calliper being adjustably lockable on the boss, the callipers (e.g. 29, 29, 27) being arranged so that when applied to a wheel they embrace both sides of the wheel and are spaced around the periphery of the wheel characterised by this, that the callipers may be arranged at any circumferential location around the wheel and that the third calliper (19, 27, 35 or 50) which is not pivoted to the boss carries an extension capable of preventing rotation of the wheel by coming into contact with fixed structure (such as the ground) but not normally in contact with the fixed structure.

2. A device according to claim 1 characterised by this, that the third calliper (19, 27, 35 or 50) is formed as a loose or slidable calliper so as to allow for the adjustable locking aspect of the device.

3. A device according to claim 1 characterised by this, that the adjustable calliper (19 or 27 or 35) is arranged to slide across the face of the boss member (11, 25, 32) in guide means (e.g. 26 or 36) formed on or in the boss member, or formed by the other two callipers.

4. A device according to claim 1 characterised by this, that stops (e.g. 28) are provided to limit movement of two of the callipers which are pivoted to the plate.

5. A device according to claim 1 and characterised by this, that a lever (39) is pivoted to the boss member (32) and arranged to engage notches (41) in the adjustable calliper (35) so as to enable the user to draw the callipers (27, 29, 29) tightly onto the wheel.

6. A device according to claim 1 and characterised by this, that each calliper (e.g. 29) has a U-shaped extension (29a) or arm which engages around the wheel.

7. A device according to claim 1 and characterised by this, that the third calliper (e.g. 27) is adjustably lockable by locking means (31) which engages the adjustable calliper with the boss member.

8. A device according to claim 7 characterised by this, that the locking means is a padlock (31) which engages in registering holes (28) in the adjustable calliper (27) and the boss member (25).

9. A device according to claim 7 and characterised by this, that the locking means is a push button type lock (53) which when pressed in engages registering means in the adjustable calliper (50) and the boss member (44).

## Patentansprüche

1. An einem Rad anbringbare Sicherheitsvorrichtung mit einem Nabenteil (11, 25, 32) und wenigstens drei im Abstand voneinander angeordneten Schenkelelementen (12, 13, 19; 27, 29, 29; 45, 46, 50), von denen zwei an dem Nabenteil schwenkbar gelagert sind, während das dritte an dem Nabenteil in einstellbaren Positionen blockierbar ist, wobei die Schenkelteile (z.B. 29, 29, 27) derart angeordnet sind, daß sie nach dem Anbringen an einem Rad beide Seiten des Rades umgreifen und längs der Peripherie des Rades Abstand voneinander haben dadurch gekennzeichnet, daß die Schenkelelemente in jeder Position am Umfang des Rades anbringbar sind, und daß das an dem Nabenteil nicht schwenkbar gelagerte dritte Schenkelelement eine Verlängerung trägt, die eine Drehung des Rades verhindert, indem es mit einer festen Struktur (z.B. dem Boden) in Berührung kommt, diese feste Struktur normalerweise jedoch nicht berührt.

2. Vorrichtung nach Anspruch 1, dadurch gekennzeichnet, daß das dritte Schenkelelement (19, 27, 35 der 50) als loses oder gleitbares Schenkelelement ausgebildet ist, derart daß es eine einstellbare Blockierung der Vorrichtung ermöglicht.

3. Vorrichtung nach Anspruch 1, dadurch gekennzeichnet, daß das einstellbare Schenkelelement (19 oder 20 oder 35) derart angeordnet ist, daß es quer zur Frontseite des Nabenteils (11, 25, 32) in Führungsmitteln (z.B. 26 oder 36) gleiten kann, die an oder in dem Nabenteil oder den beiden anderen Schenkelelementen ausgebildet sind.

4. Vorrichtung nach Anspruch 1, gekennzeichnet durch Anschläge (z.B. 28) zur Bewegungsbegrenzug der beiden an dem Nabenteil schwenkbar gelagerten Schenkelelemente.

5. Vorrichtung nach Anspruch 1, dadurch gekennzeichnet, daß ein Hebel (39) an dem Nabenteil (32) schwenkbar gelagert ist, der in an dem einstellbaren Schenkelelement (35) vorgesehene Rastkerben (41) eingrifft, so daß der Benutzer die Schenkelelemente (27, 29, 29) eng an das Rad heranziehen kann.

6. Vorrichtung nach Anspruch 1, dadurch gekennzeichnet, daß jedes Schenkelelement (z.B. 29) einen U-förmigen Ansatz (29a) oder Arm besitzt, der das Rad umgreift.

7. Vorrichtung nach Anspruch 1, dadurch gekennzeichnet, daß das dritte Schenkelement (z.B. 27) durch Sperrmittel (31), die das einstellare Schenkelelement mit dem Nabenteil verbinden, in einstellbarer Position blockierbar ist.

8. Vorrichtung nach Anspruch 7, dadurch gekennzeichnet, daß die Sperrmittel von einem Vorhängeschloß (31) gebildet sind, das in miteinander fluchtende Löcher (28) eingreift, die an dem einstellbaren Schenkelement (27) und dem Nabenteil (25) vorgesehen sind.

9. Vorrichtung nach Anspruch 7, dadurch gekennzeichnet, daß die Sperrmittel von einem druckknopfartigen Verschluß (53) gebildet sind, der nach dem Eindrücken in miteinander fluchtende Löcher (28) eingreift, die an dem einstellbaren Schenkelelement (50) und dem Nabenteil (44) vorgesehen sind.

## Revendications

1. Un dispositif de sécurité pour la fixation sur une roue comprenant un élément de moyeu (11, 25, 32) et au moins trois étriers de serrage espacés (12, 13, 19; 27, 29, 29; 45, 46, 50) deux des étriers étant articulés au moyeu et le troisième étrier étant verrouillable de façon réglable sur le moyeu, les étriers (par exemple 29, 29, 27) étant disposés de telle sorte que lorsqu'ils sont appliqués à la roue ils l'entourent des deux côtés et sont espacés autour de la périphérie de la roue, caractérisé en ce que, les étriers peuvent être disposés en tout point circonférentiel autour de la roue et que le troisième étrier (19, 27, 35 ou 50) qui n'est pas articulé sur le moyeu porte une extension susceptible d'empêcher la rotation de la roue en venant en contact avec une structure fixe (telle que le sol) mais n'est pas normalement en contact avec la structure fixe.

2. Un dispositif selon la revendication 1, caractérisé en ce que le troisième étrier (19, 27, 35 ou 50) se présente sous la forme d'un étrier libre ou coulissant de manière à permettre le verrouillage réglable du dispositif.

3. Un dispositif selon la revendication 1, caractérisé en ce que l'étrier réglable (19, 27 ou 35) est disposé pour coulisser sur la face de l'élément de moyeu (11, 25, 32) dans des moyens de guidage (par exemple 26 ou 36) ménagés sur ou dans l'élément de moyeu, ou formés par les deux autres étriers.

4. Un dispositif selon la revendication 1, caractérisé en ce que des butées (par exemple 28) sont prévues pour limiter le mouvement de deux des étriers qui sont articulés à la plaque.

5. Un dispositif selon la revendication 1, caractérisé en ce qu'un levier (39) est articulé à l'élément de moyeu (32) et disposé de manière à venir en prise avec les encoches (41) ménagées dans l'étrier réglable (35) de manière à permettre à l'utilisateur de serrer à fond les étriers (27, 29, 29) sur la roue.

6. Un dispositif selon la revendication 1, caractérisé en ce que chaque étrier (par exemple 29) présente un prolongement en forme de U (29a) ou un bras qui vient en prise autour de la roue.

7. Un dispositif selon la revendication 1, caractérisé en ce que le troisième étrier (par exemple 27) est verrouillable de façon réglable par l'intermédiaire des moyens de verrouillage (31) qui viennent en prise avec l'étrier réglable et l'élément de moyeu.

8. Un dispositif selon la revendication 7, caractérisé en ce que les moyens de verrouillage sont constitués par un cadenas (31) qui s'engage dans des trous correspondants (28) ménagés dans l'étrier réglable (27) et l'élément de moyeu (25).

9. Un dispositif selon la revendication 7, caractérisé en ce que les moyens de verrouillage sont constitués par un verrou (53) du type à bouton-poussoir qui lorsqu'il est poussé vient en prise avec des moyens correspondants ménagés dans l'étrier réglable (50) et l'élément de moyeu (44).

Fig.1.

Fig.1a.

Fig.2.

Fig.3.

Fig.4.

Fig.5. Fig.5A.

Fig.6

Fig.6A.

Fig.7.

Fig.7A.

Fig.8.

Fig.9.

Fig.10.

Fig.11.

Fig.12.

Fig.13.